# EUROPEAN PATENT SPECIFICATION

(11) **EP 3 193 682 B1**
(45) Date of publication and mention of the grant of the patent: **31.10.2018**
(21) Application number: 15757337.9
(22) Date of filing: 15.07.2015
(51) Int. Cl.: A47J 36/02

(54) **DEVICE FOR COOKING FOOD**
VORRICHTUNG ZUM KOCHEN VON NAHRUNGSMITTELN
DISPOSITIF DE CUISSON D'ALIMENTS

(30) Priority: 22.07.2014 IT UD20140125
(43) Date of publication of application: 26.07.2017
(73) Proprietor: De' Longhi Appliances S.r.l. Con Unico Socio, 31100 Treviso (IT)
(72) Inventor: DE' LONGHI, Giuseppe, I-31100 Treviso (IT)
(74) Representative: Petraz, Gilberto Luigi
(86) International application number: PCT/IB2015/055354
(87) International publication number: WO 2016/012908

(56) References cited:
- US-A1- 2014 166 644

## Description

### FIELD OF THE INVENTION

The present invention concerns a protected device for cooking food, such as a frying pan, a casserole dish, a baking tin for pizzas, a saucepan, a fish kettle or a skillet, with or without a lid.

In particular, the present invention is suitable to cook food, exploiting microwave radiations and conserving the quality and organoleptic characteristics of the food.

### BACKGROUND OF THE INVENTION

Devices for cooking food are known, configured to contain inside them the food to be cooked and suitable to be inserted inside suitable cooking apparatuses, such as microwave ovens.

It is also known to make devices for cooking food made of material that incorporates compounds susceptible to microwaves in a vast range of susceptibilities.

Thanks to the presence of said compounds, these materials are able to increase their temperature when they are exposed to high-frequency radiations, like microwaves. This allows them to be used for cooking food since they transfer their heat to the food.

It is known that microwave radiations not only have an effect on such materials by heating them, but also enter into the container itself and are absorbed by the food, which is this subjected both to the source of heat and also directly to the microwaves themselves.

It is also known that direct exposure of the food to the microwaves, especially if prolonged and/or high power, degrades the quality thereof, modifying the organoleptic characteristics. The food thus cooked or heated can also suffer even serious organoleptic alterations so that it does not always satisfy the necessary criteria of quality and desirability.

Due to the characteristics of microwave ovens and the accessories that contain microwave susceptors, some specific food preparations are difficult to obtain.

For this reason there is a tendency to use the microwave oven, and the cooking accessories comprising materials susceptible to microwaves as above, only for heating or defrosting food and not for cooking it, where for cooking one would normally prefer to use a combined microwave oven, provided with electric resistances and possibly a ventilation system, and/or provided with a grill system.

Document US-A-2014/0166644 discloses a radiation-shielding food container for heating substances in a microwave oven.

There is therefore a need to perfect a device for cooking food which can overcome at least one of the disadvantages of the state of the art.

In particular, one purpose of the present invention is to obtain a device for cooking food, suitable to be used in a microwave oven, preserving the organoleptic qualities of the food so that they are similar, equal or superior to those of the same food cooked with traditional cooking techniques through contact or irradiation that include for example known Maillard reactions.

Another purpose of the present invention is to obtain a device for cooking food that is low-cost and is easy to use.

Another purpose of the present invention is to obtain a device for cooking food that allows to apply different cooking techniques on the food, such as for example brazing, roasting, and a technique similar to griddling.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a protected device for cooking food comprises a containing body which defines a compartment or cooking cavity to contain and cook the food, and possibly a lid. At least the containing body is made of a material which comprises one or more compounds susceptible to microwaves, present in a quantity as desired on each occasion, according to requirements.

According to one aspect of the present invention, the device for cooking food comprises at least an autonomous screen configured to screen at least most of the cooking cavity from the microwaves, cooperating with the surface of the cooking cavity.

In possible variants the screen can be integrated or incorporated in the containing body, or alternatively applied upon it.

According to a variant form of embodiment, the screen, which can have the same or very similar shape to the internal profile of the containing body, can be the removable type.

According to another variant form of embodiment, the screen is removable and washable, or re-usable, or the disposable type.

According to another variant form of embodiment, the screen cooperates in at least one part with at least the internal surface of the containing body.

According to the present invention, the containing body is able to absorb a microwave radiation, using it to increase its own temperature. However, the microwave radiation is blocked by the at least one screen, at least partly preventing access to the cooking cavity present in the containing body. Consequently, the food located in the cooking cavity is cooked by conduction, taking heat from the heated containing body and not by the direct absorption of the microwave radiation. It is thus possible to cook the food by microwaves using a cooking technique such as griddling, adjusting the temperature to which the material of the containing body is heated and consequently the intensity of the microwave radiation.

According to another aspect of the present invention, the device for cooking food comprises a lid, or suitable closing element, to close the containing body, made of material that comprises one or more compounds susceptible to microwaves. The lid can comprise a screen against microwaves applied or incorporated with it. In this way it is possible to put the microwave screen both in the lid and in the containing body, depending on the shape of the device for cooking food and its type.

According to another variant form of embodiment, the at least one screen is provided with autonomous microwave susceptor means, in association or associable.

According to a possible implementation, the microwave susceptor means in association or associable with the screen have a strong susceptibility factor to microwaves.

According to another variant form of embodiment, the containing body can be associated with a bottom or lower part, to be located inside, removable and positionable as required. The bottom is configured to increase its temperature with respect to the containing body under the effect of the microwaves. According to a possible form of embodiment, the bottom comprises autonomous microwave susceptor means. According to another form of embodiment, the bottom is made of metal or is formed by a mixture of metal and, for example, silicates.

According to another variant form of embodiment, the bottom, associated with the containing body, can be configured to obtain another increase in temperature with respect to the walls thereof. According to another variant, the walls can have no material susceptible to microwaves, or can contain a limited quantity thereof.

According to the invention at least two coordinated screens can be provided, which cooperate together with the cooking cavity of the containing body. The at least two screens have different screening power with respect to each other. In particular, the different screening power can be provided and achieved according to the physical and/or chemical characteristics of the susceptor material, and/or the presence of holes or apertures, also graduated. Therefore, the at least two screens can have different morphological, chemical-physical or physical characteristics, for example holes or apertures, in order to treat the food present therein differently.

According to another aspect of the present invention, the device for cooking food is provided with a mixing member to mix the food during cooking. The mixing member can be associable with an apparatus for cooking foods such as a microwave oven configured and suitable to actuate the mixing member.

According to another variant form of embodiment, the mixing member can be associated with a drive member associable to the containing body, or can cooperate with a motion outlet with which the bottom can be provided, or a wall of the microwave oven with which the device for cooking food can be associated.

According to another variant form of embodiment, the mixing member can be configured to cooperate with the at least one microwave screen.

Other forms of embodiment concern a screen for a cooking device used to cook food with a microwave oven, the screen being configured to cooperate with at least most of an internal surface of said cooking device.

In particular, the screen is advantageously configured to screen from microwaves at least most of a cooking cavity of a containing body of the cooking device, cooperating with the surface of the cooking cavity itself.

According to a variant, the screen is reusable or, according to another variant, it is the disposable type.

According to another form of embodiment, the screen is configured to cooperate with at least one other screen able to be inserted inside the cooking device.

In a possible implementation, the two screens have substantially equal screening power, while in another possible implementation the two screens have substantially different screening power.

According to another variant, the screen is provided with autonomous microwave susceptor means in association or associable.

According to one possible implementation, the microwave susceptor means are provided or located in a lower part, or bottom, of said screen.

According to another variant, the screen is coated internally with non-stick material.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a lateral section of a device for cooking food according to forms of embodiment described here;
- fig. 2 is a lateral section of a device for cooking food according to other forms of embodiment described here;
- fig. 3 is a lateral section of a device for cooking food according to other forms of embodiment described here;
- fig. 4 is a perspective view of a device for cooking food according to the invention;
- fig. 5 is a perspective view of a device for cooking food according to the invention;
- fig. 6 is a lateral section of a part of a device for cooking food according to other forms of embodiment described here.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment. It is understood that the present invention shall include all such modifications and variants.

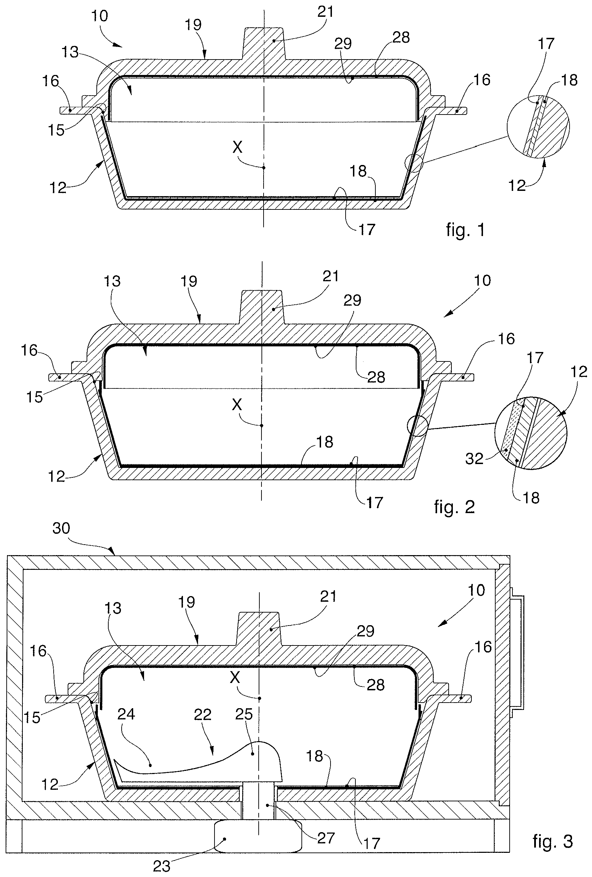

Figs. 1-7 are used to describe forms of embodiment of a protected device 10 for cooking food suitable to be used in a microwave apparatus for cooking food 30, such as a microwave oven, for cooking food in a preferentially domestic or professional environment. The device 10 can be by way of example a frying pan, a casserole dish, a baking tin for pizzas, a saucepan, a fish kettle, a skillet.

In some forms of embodiment, the device 10 comprises a containing body 12 that defines a cooking cavity 13 to contain and cook the food.

The device for cooking food 10 can be made entirely or partly of material that comprises one or more compounds susceptible to microwaves. In possible implementations, the compounds susceptible to microwaves can be chosen from a group comprising: compounds based on oxides, or sulfurs, or silicates or metal carbonates, or mixtures or combinations thereof.

Advantageously, the material of the containing body 12, to which said one or more compounds susceptible to microwaves have been added, is able to absorb the microwave radiation and transform it into heat, to increase the temperature of the material, so that it is possible to use the containing body 12 for cooking techniques that provide contact/heat conduction and/or irradiation. The device for cooking food 10 can comprise at least an autonomous screen against microwaves 18, associated with the containing body 12 and configured to screen from the microwaves at least most of the cooking cavity 13, and hence the food contained inside it, cooperating with the surface of the cooking cavity 13.

In some forms of embodiment, which can be combined with all the forms of embodiment described here, the device 10 can also include a lid 19, suitable to be positioned on the containing body 12 to close the containing body 12 and hence the cooking cavity 13.

If provided, the lid 19 can be selectively removable from the containing body 12, for example to manage the cooking of the food and the emission of cooking steam and vapors.

In possible implementations, the lid 19 too can be made of material comprising one or more compounds susceptible to microwaves, of the same or different type with respect to the containing body 12.

In other possible implementations, the lid 19 too can include a respective screen against microwaves 28, also configured to screen from microwaves at least part of the cooking cavity 13, and hence the food contained inside it, during use.

In this way, it is possible to exploit the microwaves to heat the containing body 12, and possibly the lid 19 if provided and suitably made, but without the microwaves being absorbed by the food being cooked, or in any case so that they are absorbed only to a limited degree.

Consequently, the food can be cooked by phenomena of heat conduction/contact and/or irradiation, by the containing body 12, and possibly the lid 19, and not through the absorption of microwaves. Therefore, the food is cooked and its organoleptic properties and taste are preserved, without the food becoming excessively dry, and it is possible to use cooking techniques which for example involve Maillard reactions, or frying, griddling, baking or grilling with totally equivalent or even superior results.

In some forms of embodiment, the microwave screen 18 of the containing body 12 and/or the microwave screen 28 of the lid 19 can be a holed screen, typically formed by a layer of fine metal net, with a width of the mesh less than a quarter of the wavelength of the microwaves (typically about 31 mm) so that the microwave radiation cannot pass through the net.

In some forms of embodiment, which can be combined with all the forms of embodiment described here, the microwave screen 18 of the containing body 12 and/or the microwave screen 28 of the lid 19 can be made with a compound reflecting microwaves.

The microwave screen 18, and also the possible microwave screen 28 of the lid 19, is able to prevent the microwave radiations transmitted through the containing body 12 from reaching the cooking cavity 13 and consequently the food.

In this way, the food can be cooked only, or largely, thanks to the heat transmission phenomena, that is, conduction and/or irradiation, connected to the heating of the containing body 12 and possibly of the lid 19, while the cooking phenomena connected to microwaves are prevented or greatly reduced by the screening effect described above.

In particular, the microwave screen 18 of the containing body 12, and also the possible microwave screen 28 of the lid 19, can be disposed so as to be intermediate between the food contained in the cooking cavity 13 and the microwave source, yet still allowing the microwaves to reach the material of which the containing body 12 and the possible lid 19 are made, so that it can heat up.

For example, as will be explained in more detail hereafter, the microwave screen 18, and also the possible microwave screen 28, can be incorporated or integrated in the material of the containing body 12 and respectively the lid 19, or can be applied on the surface inside them in a fixed or removable manner.

Moreover, in variant forms of embodiment, the microwave screen 18, like the possible microwave screen 28, can be removable and re-usable, or the disposable type.

In some forms of embodiment, the device 10 can have any shape or size desired.

For example, figs. 1, 2 and 3 are used to describe forms of embodiment of the device 10 that can have a positioning axis X, for example oriented vertically during use.

The device 10 can have any axial-symmetrical shape, for example round, except for possible protrusions, such as gripping handles 16, for example associated directly with the containing body 12 or the lid 19 if provided.

In possible example forms of embodiment, not restrictive of the field of protection, the device 10 can be symmetrical to the positioning axis X, to improve the uniformity of the cooking of the food inside it.

In other forms of embodiment, the device 10 can have a rectangular shape, square or polygonal in general, possibly with sharp or beveled edges.

In some forms of embodiment, the containing body 12 can have a cylindrical external shape, conical or truncated cone.

In other forms of embodiment, the containing body 12 can have a quadrangular external shape, such as cubic, or parallelepiped with a rectangular base or polygonal in general.

In some forms of embodiment, the containing body 12 can be hollow, to define the cooking cavity 13 inside which the food is disposed.

The containing body 12 can be provided with an aperture 15, which for example in use can be disposed upward and aligned in the direction of the positioning axis X, to allow access to the cooking cavity 13 toward the outside. The lid 19 can have a shape mating with the aperture 15, to obtain the correct closure of the device 10.

The cooking cavity 13 can have a shape equal to the external shape of the containing body 12 or, alternatively, a different shape. For example, the cooking cavity 13 can have an axial-symmetrical shape, equal to or different from the external shape of the containing body 12.

In some forms of embodiment, the cooking cavity 13 can be more or less deep, depending on the type of device 10. Merely by way of example, the cooking cavity 13 of a device 10 in the form of a pizza pan can be less deep, but wider than the cooking cavity 13 of a device 10 in the form of a casserole dish, which has opposite proportions.

The microwave screen 18, 28 can be made for example of metal material that reflects microwaves as said above, to block their entrance into the cooking cavity 13.

In possible implementations, the microwave screen 18, 28 can be disposed near the cooking cavity 13, or inside the device for cooking food 10.

In forms of embodiment described for example with reference to figs. 1 and 2, which can be combined with all the forms of embodiment described here, the microwave screen 18 can be associated with the containing body 12, for example to delimit the cooking cavity 13 laterally and below.

The microwave screen 18 can be integrated or incorporated in the containing body 12, see fig. 1 for example, and can be a single body therewith. In particular, the microwave screen 18 can be drowned in the material of the containing body 12.

Advantageously, this solution can allow a long life for the device for cooking food 10, and also easy cleaning, since there are no protruding or partly removable components.

In other forms of embodiment described with reference to fig. 2, which can be combined with all the forms of embodiment described here, the microwave screen 18 can be an external layer applied, definitively or removably, to an internal surface 17 of the cooking cavity 13 of the containing body 12.

In forms of embodiment described above, where the microwave screen 18 is applied to the internal surface 17 of the cooking cavity 13, the internal surface 17 is defined by the microwave screen 18 itself.

In possible implementations, the microwave screen 18 can be applied by spraying, spreading, painting or metal deposition, in this case obtaining a definitive application. In alternative implementations the microwave screen 18 can be applied using a film or solid coating, or in the form of a net with apertures suitable to block the microwave radiations or other known techniques, both in the form of a definitive application and also the removable type.

In forms of embodiment where the microwave screen 18 is made removable, the microwave screen 18 can be the disposable type.

In other forms of embodiment where the microwave screen 18 can be an external layer, in contact during use with the food, the reflecting material of which it is made can be compatible with the food itself and therefore, by way of example and not restrictive of the field of protection, it does not release or emit noxious substances, fumes or vapors.

Advantageously, this solution can allow to change the microwave screen 18 frequently, so that it is always in optimum functioning conditions and cleanliness; in this way the cooking cavity 13 can be preserved from possible damage caused by use and scratches due to friction with kitchen utensils such as ladles, spoons and forks.

In possible variant forms of embodiment, the containing body 12 can be provided with the handles 16 cited above, configured to facilitate the operations to handle and grip the containing body 12. Alternatively, or additionally, handles 16 can be provided on the lid 19.

In some forms of embodiment, the lid 19 comprising the microwave screen 28 can also delimit the cooking cavity 13 laterally if the latter has a shallow depth, as for example in the case of a pizza pan. For example, to this purpose the lid 19 can have a bell shape.

In some forms of embodiment, described with reference to fig. 1, the microwave screen 28 can be integrated into the lid 19 in the same way and with similar advantages as described above for forms of embodiment of the microwave screen 18 integrated or incorporated in the containing body 12.

In other forms of embodiment, described with reference to fig. 2, the microwave screen 28 can be applied on an internal surface 29, or vault, of the lid 19, similar to what was described with reference to forms of embodiment in which the microwave screen 18 is applied on the internal surface 17 of the cooking cavity 13 of the containing body 12.

In forms of embodiment described above, where the microwave screen 28 is applied on the internal surface 29 of the lid 19, the internal surface 29 or vault is defined by the microwave screen 28 itself.

In some forms of embodiment, which can be combined with all the forms of embodiment described here, the characteristics of the materials or susceptor means and/or the at least one microwave screen 18, 28 can be provided so that the device 10 is able to regulate the flow of microwave radiations, which can be partial, for example according to a desired progressivity, and can also reach a total screening.

In a possible variant form of embodiment, described for example with reference to figs. 1 and 2, when the containing body 12 and the lid 19 are associated with each other, the respective microwave screens 18, 28 can be suitable to screen the cooking cavity 13 totally or, when for example only the microwave screen 18 of the containing body 12 is provided, the cooking cavity 13 is only partly screened, see fig. 3 for example.

In some forms of embodiment, which can be combined with all the forms of embodiment described here, only the microwave screen 18 of the containing body 12 may be provided (see merely by way of example fig. 3), or both the microwave screen 18 of the containing body 12 and also the microwave screen 28 of the lid 19 (see figs. 1 and 2), or also for example only the microwave screen 28 of the lid 19.

In some forms of embodiment, the lid 19 can also advantageously be provided with vent holes, made through in its thickness, for example to allow possible steam produced during the cooking of the food to escape outside.

The lid 19 can also be provided with a handle 21 to facilitate grip, for example to lift and lower it with respect to the containing body 12. The handle 21 can be disposed on the upper part of the lid 19, typically in a central position.

In forms of embodiment described using fig. 3, which can be combined with all the forms of embodiment described here, the device for cooking food 10 can comprise at least a mixing or stirring member 22, installed inside the cooking cavity 13. One example of a mixing or stirring member 22 can be a stirrer, a mixer, a blade or a mixing spatula.

In possible variant forms of embodiment, the mixing member 22 can be provided both in forms of embodiment where only the microwave screen 18 of the containing body 12 is provided (fig. 3), or in forms of embodiment where also the microwave screen 28 of the lid 19 is additionally provided (figs. 1 and 2), and also in forms of embodiment where only the microwave screen 28 of the lid 19 is provided.

In further possible variant forms of embodiment, the mixing member 22 can be provided both when the microwave screen 18, 28 is integrated or incorporated in the containing body 12 and/or respectively in the lid 19, and also when the microwave screen 18, 28 is applied on an internal surface of the cooking cavity 13 of the containing body 12 and/or the lid 19.

The mixing member 22 can be configured to keep the food in the cooking cavity 13 mixed or stirred during cooking, and this can be advantageous in the case of all those foods that need stirring during cooking.

The mixing member 22 can be provided for example with one or more rotary blades 24, twisted, with a winged profile or rectilinear, to facilitate mixing, associated with a hub 25 that acts as a rotation fulcrum for the blades 24.

In some forms of embodiment, the mixing member 22 can be made to move by a motor member 23, which can be associable with the containing body 12, or can cooperate with a motion outlet with which the bottom can be provided, or a wall of the microwave oven with which the cooking device 10 can be associated.

In possible implementations, for example, a transmission shaft 27 can be directly connected to the motor member 23, through inside the cooking cavity 13, and with which the hub 25 of the mixing member 22 is associated to move the blades 24.

In some forms of embodiment, the transmission shaft 27 can be an integrating part of the device 10 and the motor can be an external unit, for example associated with the apparatus for cooking food 30. For example, the same transmission shaft 27 provided in microwave ovens to rotate a typical rotating plate normally present therein can be used.

In some forms of embodiment, it is possible to provide that the device 10 comprises a plurality of mixing members 22, equally distributed in the cooking cavity 13, to make the mixing of the food uniform and consequently the cooking.

In some forms of embodiment, which can be combined with all the forms of embodiment described here, the containing body 12 and possibly the lid 19 if provided, can be made based on a binding material, organic or inorganic, in which the compounds susceptible to microwaves are dispersed or distributed, for example homogeneously or according to preferential patterns.

In possible implementations, the binder can be chosen from a group comprising: ceramic, ceramic clay, feldspar or mixtures thereof, and similar materials suitable for the production of ceramics, porcelain, pottery, crockery in general, tiles.

Possible examples of compounds susceptible to microwaves and binding materials usable according to the present description are described in the European patent application EP-A-2.531.461.

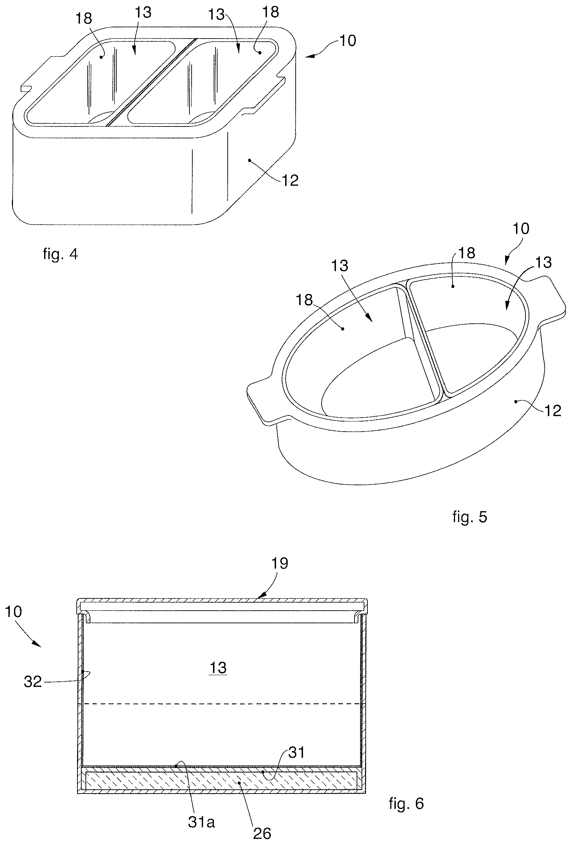

Other examples are described in documents US-A-4,956,533, US-A-5,183,787, US-A-2003/0226840, EP-A-0.496.130 and WO-A-97/24295. Figs. 4 and 5 are used to describe forms of embodiment of the present invention, which can be combined with all the forms of embodiment described here, in which at least two microwave screens 18 are provided, able to be disposed for example in coordinated manner in the cooking cavity 13. In particular, in variant forms of embodiment described with reference to fig. 4, the two microwave screens 18 can be the same shape and size, while in variant forms of embodiment described with reference to fig. 5, the two microwave screens 18 can be different shapes and/or sizes. Furthermore, the at least two microwave screens 18 have different screening power with respect to each other.

Fig. 6 is used to describe forms of embodiment, which can be combined with all the forms of embodiment described here, in which the at least one microwave screen 18 is provided, in association or associable, with autonomous microwave susceptor compounds, or a component made of material susceptible to microwaves, indicated in their entirety as autonomous microwave susceptor means 26. The microwave screen 18 can have any desired height, according to the cooking needs, as can be seen in fig. 6, where the highest variant is shown with a continuous line, and the lowest variant is shown with a line of dashes. In the forms of embodiment described here, the microwave screen 18 can be shaped to define a hollow bottom 31, inside which the autonomous microwave susceptor means 26 are inserted. The hollow bottom 31 can have an upper wall 31a which, following microwave screening phenomena and heating by means of the microwave susceptor means can be used for griddling.

Also in the variants described with reference to figs. 4 to 6, the shape and size of the microwave screen 18 can be any whatsoever, depending on applications and requirements and, moreover, in these variants too the microwave screen 18 can be removable, re-usable or the disposable type.

Furthermore, in some forms of embodiment, which can be combined with all the forms of embodiment described here, the at least one microwave screen 18 can be coated internally with non-stick material, such as for example as indicated in figs. 2 and 6 with the reference number 32, which can be for example both ceramic based or plastic based. The non-stick coating can be complete or partial.

In other forms of embodiment, which can be combined with all the forms of embodiment described here, the cooking cavity 13 itself can be coated internally with a non-stick material, which can be for example ceramic based or plastic based.

In other forms of embodiment, which can be combined with all the forms of embodiment described here, the characteristics of the materials or susceptor means and/or the at least one microwave screen can be selected appropriately to obtain a thermal flywheel effect. For example, the thermal flywheel effect can be such as, for example after a suitable pre-heating, to keep a temperature sufficient to cook the food and, for example in some cases a grilling effect.

It is clear that modifications and/or additions of parts may be made to the device for cooking food 10 as described heretofore, without departing from the field and scope of the present invention.

It is also clear that, although the present invention has been described with reference to some specific examples, a person of skill in the art shall certainly be able to achieve many other equivalent forms of device for cooking food 10, having the characteristics as set forth in the claims and hence all coming within the field of protection defined thereby.

## Claims

1. Device for cooking food comprising a containing body (12) defining a cooking cavity (13) to contain and cook said food and possibly a lid (19), at least said containing body (12) being made of a material which comprises one or more compounds susceptible to microwaves, **characterized in that** said device comprises internally at least two autonomous screens (18) configured to screen at least the most part of said cooking cavity (13) from the microwaves, wherein said at least two screens (18) are cooperating with the surface of said cooking cavity (13), said at least two screens (18) having different screening power with respect to each other.

2. Device for cooking food as in claim 1, **characterized in that** said screens (18) are irremovable and configured to cooperate with an internal profile of said containing body (12).

3. Device for cooking food as in claim 1 or 2, **characterized in that** said screens (18) cooperate in at least one part with at least the internal surface of said containing body (12).

4. Device for cooking food as in claim 3, **characterized in that** said screens (18) are the reusable type.

5. Device for cooking food as in any claim from 1 to 3, **characterized in that** said screens (18) are the disposable type.

6. Device for cooking food as in any claim from 1 to 5, **characterized in that** said at least two screens (18) are provided with autonomous microwave susceptor means, in association or associable.

7. Device for cooking food as in claim 6, **characterized in that** said microwave susceptor means (26) in association or associable with said at least two screens (18) have a strong susceptibility factor to microwaves.

8. Device for cooking food as in any of the claims from 1 to 7, **characterized in that** said at least two screens (18) are coated internally with non-stick material (32).

9. Screen system for a cooking device used to cook food with a microwave oven, **characterized in that** it comprises at least two screens (18) configured to screen at least the most part of a cooking cavity (13) of said cooking device from the microwaves, wherein said at least two screens (18) are configured to cooperate with at least most of an internal surface of said cooking device and are able to be inserted inside the cooking device, wherein said at least two screens (18) have different screening power.

10. Screen system as in claim 9, **characterized in that** said screens (18) are reusable.

11. Screen system as in claim 9, **characterized in that** said screens (18) are the disposable type.

12. Screen system as in any of the claims from 9 to 11, **characterized in that** said screens (18) are provided with autonomous microwave susceptor means (26) in association or associable.

13. Screen system as in claim 12, **characterized in that** the microwave susceptor means (26) are provided or located in a lower part of said screens (18).

14. Screen system as in any of the claims from 9 to 13, **characterized in that** said screens (18) are coated internally with non-stick material (32).

15. Apparatus for cooking food with microwaves comprising a device for cooking food (10) as in any of the claims from 1 to 8.

## Patentansprüche

1. Vorrichtung zum Zubereiten von Speisen, mit einem Behälterkörper (12), der einen Kochhohlraum (13) zur Aufnahme und zum Zubereiten der Speisen eingrenzt, und möglicherweise einem Deckel (19), wobei wenigstens der Behälterkörper (12) aus einem Material hergestellt ist, das mindestens eine für Mikrowellen empfängliche Verbindung enthält, **dadurch gekennzeichnet, dass** die Vorrichtung intern wenigstens zwei autonome Abschirmungen (18) aufweist, die dazu konfiguriert sind, wenigstens den Hauptteil des Kochhohlraums (13) von den Mikrowellen abzuschirmen, wobei die wenigstens zwei Abschirmungen (18) mit der Oberfläche des Kochhohlraums (13) zusammenwirken und die wenigstens zwei Abschirmungen (18) voneinander verschiedene Abschirmleistungsvermögen aufweisen.

2. Vorrichtung zum Zubereiten von Speisen nach Anspruch 1, **dadurch gekennzeichnet, dass** die Abschirmungen (18) entfernbar und dazu konfiguriert sind, mit einem internen Profil des Behälterkörpers (12) zusammenzuwirken.

3. Vorrichtung zum Zubereiten von Speisen nach Anspruch 1 oder 2 **dadurch gekennzeichnet, dass** die Abschirmungen (18) in wenigstens einem Teil mit wenigstens der Innenoberfläche des Behälterkörpers (12) zusammenwirken.

4. Vorrichtung zum Zubereiten von Speisen nach Anspruch 3, **dadurch gekennzeichnet, dass** die Abschirmungen (18) vom wiederverwendbaren Typ sind.

5. Vorrichtung zum Zubereiten von Speisen nach einem der Ansprüche 1 bis 3, **dadurch gekennzeichnet, dass** die Abschirmungen (18) vom Einwegtyp sind.

6. Vorrichtung zum Zubereiten von Speisen nach einem der Ansprüche 1 bis 5, **dadurch gekennzeichnet, dass** die wenigstens zwei Abschirmungen (18) autonome Mikrowellensuszeptormittel im Verbund oder verbindbar miteinander aufweisen.

7. Vorrichtung zum Zubereiten von Speisen nach Anspruch 6, **dadurch gekennzeichnet, dass** die Mikrowellensuszeptormittel (26) im Verbund oder verbindbar mit den wenigstens zwei Abschirmungen (18) einen starken Suszeptibilitätsfaktor für Mikrowellen haben.

8. Vorrichtung zum Zubereiten von Speisen nach einem der Ansprüche 1 bis 7, **dadurch gekennzeichnet, dass** die wenigstens zwei Abschirmungen (18) innen mit einem Antihaftmaterial (32) beschichtet sind.

9. Abschirmsystem für eine Kochvorrichtung, die zum Zubereiten von Speisen mit einem Mikrowellenofen verwendet wird, **dadurch gekennzeichnet, dass** es wenigstens zwei Abschirmungen (18) aufweist, die dazu konfiguriert sind, wenigstens den Hauptteil eines Kochhohlraums (13) der Kochvorrichtung von den Mikrowellen abzuschirmen, wobei die wenigstens zwei Abschirmungen (18) dazu konfiguriert sind, mit wenigstens dem Großteil einer Innenoberfläche der Zubereitungsvorrichtung zusammenzuwirken und die dazu ausgelegt sind, in die Zubereitungsvorrichtung eingeschoben zu werden, wobei die wenigstens zwei Abschirmungen (18) verschiedene Abschirmleistungsvermögen haben.

10. Abschirmsystem nach Anspruch 9, **dadurch gekennzeichnet, dass** die Abschirmungen (18) wiederverwendbar sind.

11. Abschirmsystem nach Anspruch 9, **dadurch gekennzeichnet, dass** die Abschirmungen (18) vom Einwegtyp sind.

12. Abschirmsystem nach einem der Ansprüche 9 bis 11, **dadurch gekennzeichnet, dass** die Abschirmungen (18) verbundene oder verbindbare autonome Mikrowellensuszeptormittel (26) aufweisen.

13. Abschirmsystem nach Anspruch 12, **dadurch gekennzeichnet, dass** die Mikrowellensuszeptormittel (26) in einem unteren Teil der Abschirmungen (18) vorgesehen oder dort angeordnet sind.

14. Abschirmsystem nach einem der Ansprüche 9 bis 13, **dadurch gekennzeichnet, dass** die Abschirmungen (18) innen mit einem Antihaftmaterial (32) beschichtet sind.

15. Gerät zum Zubereiten von Speisen mit Mikrowellen, mit einer Vorrichtung zum Zubereiten von Speisen (10) nach einem der Ansprüche 1 bis 8.

## Revendications

1. Un dispositif pour cuire des aliments, comprenant un corps (12) formant contenant définissant une cavité de cuisson (13) pour contenir et cuire ledit aliment et éventuellement un couvercle (19), au moins ledit corps (12) formant contenant étant fait en un matériau qui comprend ou plusieurs composés sensibles aux micro-ondes, **caractérisé en ce que** ledit dispositif comprend intérieurement au moins deux écrans autonomes (18) configurés pour faire écran aux micro-ondes sur au moins la majeure partie de ladite cavité de cuisson (13), lesdits au moins deux écrans (18) coopérant avec la surface de ladite cavité de cuisson (13), lesdits au moins deux écrans (18) ayant des capacités de filtrage différentes l'un par rapport à l'autre.

2. Dispositif pour cuire des aliments selon la revendication 1, **caractérisé en ce que** lesdits écrans (18) sont amovibles et configurés pour coopérer avec un profil interne dudit corps (12) formant contenant.

3. Dispositif pour cuire des aliments selon la revendication 1 ou la revendication 2, **caractérisé en ce que** lesdits écrans (18) coopèrent dans au moins une partie avec au moins la surface interne dudit corps (12) formant contenant.

4. Dispositif pour cuire des aliments selon la revendication 3, **caractérisé en ce que** lesdits écrans (18) sont du type réutilisable.

5. Dispositif pour cuire des aliments selon l'une quelconque des revendications 1 à 3, **caractérisé en ce que** lesdits écrans (18) sont du type jetable.

6. Dispositif pour cuire des aliments selon l'une quelconque des revendications 1 à 5, **caractérisé en ce que** lesdits au moins deux écrans (18) sont munis de moyens autonomes susceptifs aux micro-ondes, en association ou aptes à être associés.

7. Dispositif pour cuire des aliments selon la revendication 6, **caractérisé en ce que** lesdits moyens susceptifs aux micro-ondes (26) en association ou aptes à être associés auxdits au moins deux écrans (18) présentent un fort facteur de susceptibilité aux micro-ondes.

8. Dispositif pour cuire des aliments selon l'une quelconque des revendications 1 à 7, **caractérisé en ce que** lesdits au moins deux écrans (18) sont revêtus intérieurement d'un matériau antiadhésif (32).

9. Système d'écrans pour un dispositif de cuisson utilisé pour cuire des aliments avec un four à micro-ondes, **caractérisé en ce qu'**il comprend au moins deux écrans (18) configurés pour faire écran aux micro-ondes dans au moins la majeure partie d'une cavité de cuisson (13) dudit dispositif de cuisson, lesdits au moins deux écrans (18) étant configurés pour coopérer avec au moins la majeure partie d'une surface interne dudit dispositif de cuisson et étant aptes à être insérés à l'intérieur du dispositif de cuisson, lesdits au moins deux écrans (18) ayant des capacités de filtrage différentes.

10. Système d'écran selon la revendication 9, **caractérisé en ce que** lesdits écrans (18) sont réutilisables.

11. Système d'écran selon la revendication 9, **caractérisé en ce que** lesdits écrans (18) sont de type jetable.

12. Système d'écran selon l'une quelconque des revendications 9 à 11, **caractérisé en ce que** lesdits écrans (18) sont munis de moyens autonomes (26) susceptifs aux micro-ondes en association ou aptes à être associés.

13. Système d'écran selon la revendication 12, **caractérisé en ce que** les moyens (26) susceptifs aux micro-ondes sont prévus ou situés dans une partie inférieure desdits écrans (18).

14. Système d'écran selon l'une quelconque des revendications 9 à 13, **caractérisé en ce que** lesdits écrans (18) sont revêtus intérieurement d'un matériau antiadhésif (32).

15. Appareil de cuisson d'aliments par des micro-ondes comprenant un dispositif pour cuire des aliments (10) selon l'une quelconque des revendications 1 à 8.
